# EUROPEAN PATENT SPECIFICATION

(11) **EP 4 041 428 B1**
(45) Date of publication and mention of the grant of the patent: **03.12.2025**
(21) Application number: 20874465.6
(22) Date of filing: 06.10.2020
(51) Int. Cl.: B01D 27/14

(54) **CARTRIDGE ENDPLATE WITH INTEGRATED SEALING AND REMOVAL FEATURE**
KASSETTENENDPLATTE MIT INTEGRIERTER ABDICHTUNGS- UND ENTFERNUNGSFUNKTION
PLAQUE TERMINALE DE CARTOUCHE DOTÉE D'UN ÉLÉMENT INTÉGRÉ D'ÉTANCHÉITÉ ET DE RETRAIT

(30) Priority: 11.10.2019 US 201962913993 P
(43) Date of publication of application: 17.08.2022
(73) Proprietor: Cummins Filtration Inc., Nashville, TN 37214 (US)
(72) Inventor: THORAT, Shital Sudam, Pune 411046 (IN); BALTZ, Amy E., Cookeville, Tennessee 38506 (US); BOWERMAN, Jeff A., Cookeville, Tennessee 38506 (US)
(74) Representative: Marks & Clerk LLP
(86) International application number: PCT/US2020/054381
(87) International publication number: WO 2021/071825

(56) References cited:
- EP-A1- 2 765 298
- WO-A1-2011/126136
- US-A- 5 484 466
- US-A1- 2005 247 617
- US-A1- 2009 026 124
- US-A1- 2010 294 712
- US-A1- 2013 087 497
- US-A1- 2013 087 497
- US-B1- 6 626 299
- US-B2- 8 216 470
- US-B2- 9 044 695

## Description

### TECHNICAL FIELD

The present application relates generally to fluid/air filtration systems.

### BACKGROUND

Internal combustion engines generally combust a mixture of fuel (e.g., diesel, gasoline, natural gas, etc.) and air. Prior to entering the engine, the fuel is typically passed through a filter cartridge to remove particulate matter (e.g., dust, metal particles, debris, etc.) from the fuel prior to combustion. Similarly, lubricant or lube (e.g., engine oil) provided to the engine may also be passed through a filter cartridge so as to remove particulate matter from the lube before communicating to the engine. The fuel or oil may include water, which may accumulate in the filter and may have to be removed.

Filter elements (e.g., filter cartridges) often include a seal member that is compressed against a component of the filtration system housing or another portion of the filtration system. The seal member forms a seal between the filtration system housing and the filter element, thereby preventing fluid/air from bypassing the filter elements (e.g., for air to bypass an air filter element or liquid to bypass a liquid filter element). If an improper filter element (i.e., a non-authorized or non-genuine filter element) is installed in a filtration system, or if the proper filter element is installed incorrectly, the seal member of the filter element may not form a proper seal, and fluid/air may bypass the filter element, causing damage to downstream components or a drop in operating pressure. Accordingly, the installation of an improper filter element, or the improper installation of a filter element, can harm critical components in the filtration system, cause improper sealing, diminish emission compliance mechanisms, cause subpar performance, and the like.

According to its title and abstract US 8216470 B2 relates to a filter cartridge which has an endplate structure formed of a heat cured material, such as polyurethane, where at least one of the top end and the bottom end of the outer filter and the inner filter are embedded within the heat cured material. The heat cured material can provide an endplate structure that is convenient for manufacture and that has one or more sealing surfaces to seal with a housing that the filter cartridge is assembled with.

According to its title and abstract US 2013/087497 A1 relates to a filter within a filter cartridge design that includes a sealing structure on an endplate of an outer filter element. Generally, the sealing structure includes an annular flange on the endplate that can directly seal against an interior surface of a housing when the filter cartridge is assembled for use. During filtration, the annular flange prevents a working fluid from bypassing the outer filter element. The sealing flange can seal with the housing in a press fit engagement.

According to its title and abstract US 9044695 B2 relates to a filter device which has a filter housing receiving a filter element defining a longitudinal axis and being in the form of a filter cartridge. An end cap forms an enclosure for the relevant end rim of the filter material. The end cap fixes the position of the filter element in its functional position by being on an element receiver that interacts with the bottom part of the filter housing. The element receiver and the assigned end cap of the filter element, on their coming into engagement with one another in the functional position of the filter element are provided with shaped irregularities matched to one another to enable the engagement in a positional relationship directed towards one another.

According to its title and abstract WO 2011/126136 A1 relates to a filter element that is provided with a first filtration material which has a function of removing dust in fuel, and also with a second filtration material which is contained inside the first filtration material and has a function of removing water in the fuel.

### SUMMARY

Various embodiments provide for a filtration system that includes a housing defining an internal volume. A secondary filter element is positioned within the internal volume of the housing. A primary filter element is positioned within the internal volume of the housing. The filter media includes filter media positioned between a primary filter element first endplate and a primary filter element second endplate. The primary filter element first endplate includes an external surface and an internal surface. The internal surface abuts the filter media. A raised wall extends from the internal surface away from the external surface. The raised wall forms a radial seal with an external surface of the secondary filter element.

Various embodiments provide for a filter element that includes filter media positioned between a first endplate and a second endplate. The filter media defines an internal volume. The first endplate includes a first external surface and a first internal surface. The first internal surface abuts the filter media. A raised wall extends from the first internal surface away from the first external surface. The raised wall forms a radial seal with a second external surface of a secondary filter element. The secondary filter element is disposed within the internal volume.

Various embodiments further provide for a method of securing a filter element within a filter housing that includes positioning a secondary filter element within a filter housing, the secondary filter element defining an internal volume that receives a standpipe of the filter housing such that the standpipe positioned within the secondary filter element. The method further comprises positioning a primary filter element within the filter housing such that the secondary filter element is within the primary filter element. The primary filter element includes a primary filter second endplate and a primary filter element first endplate. The primary filter element first endplate includes a seal surface. The seal surface is contacts the annular portion such that a first radial seal is formed between the seal surface and the annular portion.

These and other features, together with the organization and manner of operation thereof, will become apparent from the following detailed description when taken in conjunction with the accompanying drawings, wherein like elements have like numerals throughout the several drawings described below.

### BRIEF DESCRIPTION OF THE DRAWINGS

FIG. 1 shows a perspective view of a filtration system in an unassembled state, according to an example embodiment.
FIG. 2A shows a cross-sectional side view of the filtration system of FIG. 1 when in an assembled state.
FIG. 2B shows a cross-sectional side view of a portion of the filtration system of FIG. 2A.
FIG. 3A shows a top perspective view of a secondary filter element for the filtration system of FIG. 1, according to an example embodiment.
FIG. 3B shows a cross-sectional side view of the secondary filter element of FIG. 3A.
FIG. 4 shows a perspective view of an unassembled primary filter element of the filtration system of FIG. 1, according to an example embodiment.
FIG. 5A shows a top perspective view of the filter element of FIG. 4 in an assembled state.
FIG. 5B shows a bottom perspective view of the filter element of FIG. 5A.
FIG. 5C shows a top view of the filter element of FIG. 5A.
FIG. 6A shows a top perspective view of a primary filter endplate with sealing features of the filter element of FIG. 4, according to an example embodiment.
FIG. 6B shows a bottom perspective view of the primary filter endplate of FIG. 6A.
FIG. 6C shows a top plan view of the primary filter endplate of FIG. 6A.
FIG. 6D shows a bottom plan view of the primary filter endplate of FIG. 6A.
FIG. 6E shows a side view of the primary filter endplate of FIG. 6A.
FIG. 7 shows a cross-sectional side view of the primary filter element of FIG. 4 in an assembled state.
FIG. 8 shows a portion of the primary filter element of FIG. 7.
FIGS. 9A and 9B show views of the radial seal formed between the primary filter endplate of the primary filter element and secondary filter element in the assembled filtration system of FIG. 1.

### DETAILED DESCRIPTION OF VARIOUS EMBODIMENTS

Embodiments described herein relate generally to a system and method for securing a filter element within a filter housing. The primary filter element includes a primary filter endplate with a raised wall that is configured to hold the filter media and secondary filter element in place within the filter housing. The primary filter endplate is configured to form a radial seal with the secondary filter element such that the endplate forms a seal between the filter media (e.g., primary filter media) and the secondary filter element. In some embodiments, the primary filter endplate includes a rectangular (e.g., "u-shaped) groove that provides a touch surface for a user (e.g., end user, service personnel, etc.) to contact and grip for ease of serviceability (e.g., removal of one or more elements of the filter element from the housing). Additionally, the primary filter endplate may include a flat bottom side that provides structural support to the primary filter endplate and filter media (e.g., the filter element) within the housing.

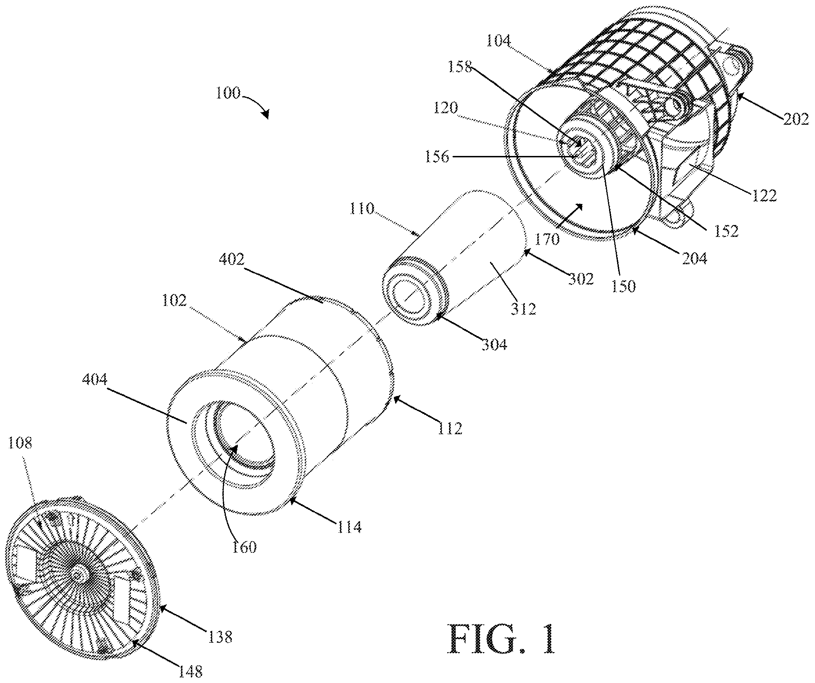

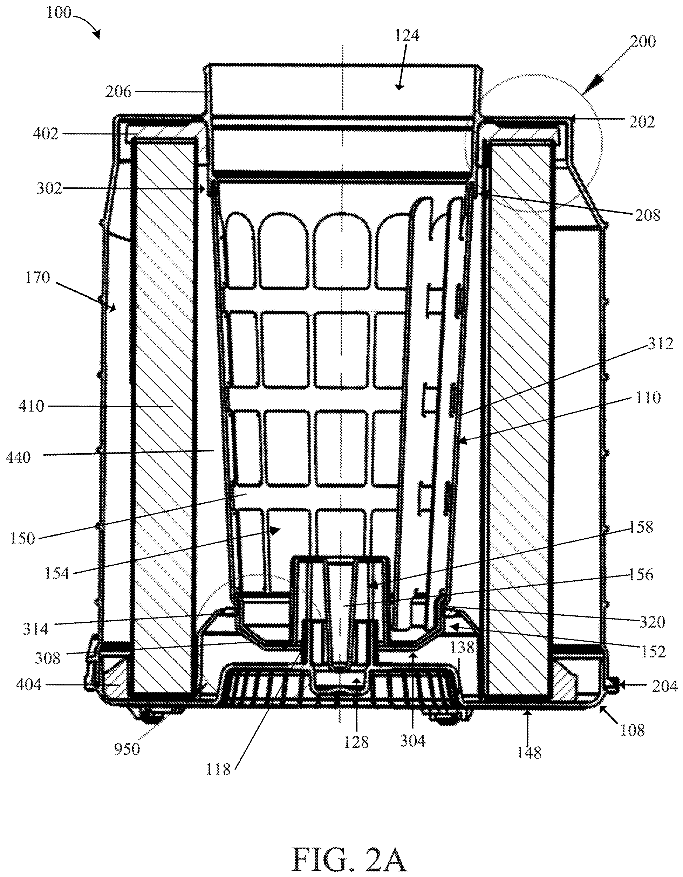

FIG. 1 shows a perspective view of a filtration system 100 in an unassembled state, according to an example embodiment. FIG. 2A depicts the filtration system 100 of FIG. 1 in the assembled configuration. The filtration system 100 includes a filter housing 104, a primary filter element 102, a secondary filter element 110, and a cover 108 (e.g., housing endcap, housing cover, etc.). The filter housing 104 includes a first housing end 202 (e.g., top end) and a second housing end 204 disposed axially away from the first housing end 202. An inlet 122 is formed along wall of the filter housing 104 between the first housing end 202 and the second housing end 204. As shown in FIG. 2A, an outlet 124 is formed along the first housing end 202 through an outlet wall 206 that extends from the first housing end 202 away from the second housing end 204. The second housing end 204 is substantially opened and configured to receive the cover 108. In some embodiments, an internal surface 138 of the cover 108 is configured to couple to the second housing end 204. For example, the cover 108 may threadedly engage a threaded member along the second housing end 204 and may include one or more clip elements that lock with complementary elements in the second housing end 204.

Referring back to FIG. 1, an interior space 170 is defined within the filter housing 104. A standpipe 120 (e.g., protruding member) is disposed within the interior space 170 and extends from the first housing end 202 towards the second housing end 204. In some embodiments, the standpipe 120 is formed with (e.g., molded on) the filter housing 104. The standpipe 120 is configured to receive the secondary filter element 110, such that the cylindrical wall 312 of the secondary filter element 110 is disposed around the standpipe 120. A secondary filter element first end 302 is configured to be adjacent to the first housing end 202 such that the secondary filter element 110 is disposed on and tightly wrapped around the outer surface of the standpipe 120. The standpipe 120 includes a cage portion 150 with a plurality of openings 154 and a top portion 152 extending from the cage portion 150 away from the first housing end 202. The top portion 152 of the standpipe 120 is configured to receive an internal surface of the secondary filter element second end 304. The top portion 152 has a cavity 158 formed therewithin and a protrusion 156 that extends from the base of the cavity 158 (e.g., approximately one-fourth the length of the standpipe 120) towards the second housing end 204.

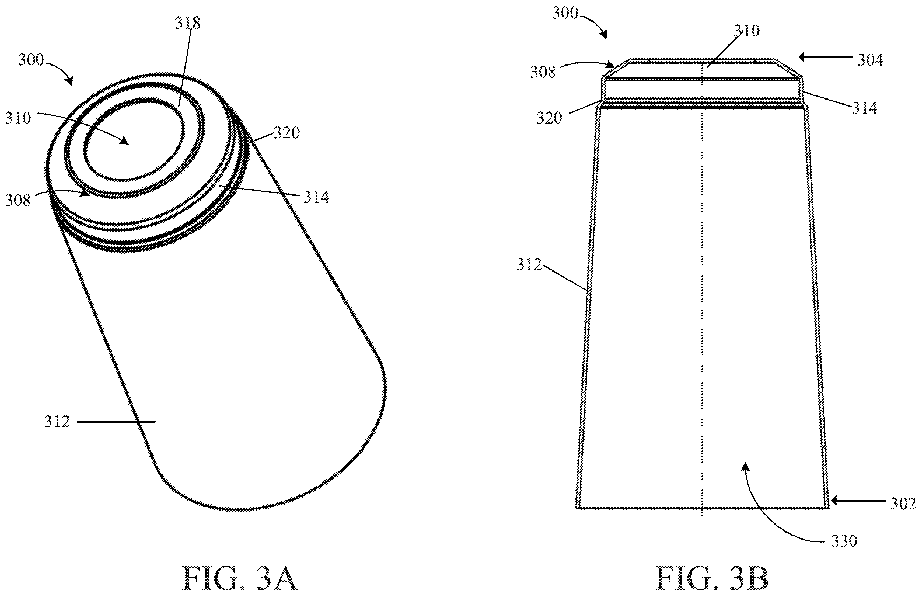

As shown in FIG. 2A, when the secondary filter element 110 is installed within the filter housing 104, the secondary filter element first end 302 engages (e.g., is disposed within) a housing slot 208 disposed on an end of the centrally located outlet wall 206. In some embodiments, the secondary filter element first end 302 is press-fit within the housing slot 208. Once installed, the standpipe 120 is disposed within an internal volume 330-as shown in FIG. 3B-of the secondary filter element 110. As shown in FIGS. 3A and 3B, an annular portion 314 extends from the cylindrical wall 312 of the secondary filter element 110 toward the secondary filter element second end 304. A lip portion 320 is disposed between the annular portion 314 and the cylindrical wall 312. A top portion 308 of the secondary filter element 110 extends from the lip portion 320 toward a rim portion 318 along the secondary filter element second end 304. As shown in FIG. 2A, the rim portion 318 has a substantially centrally located opening 310 formed therewithin that receives a portion of the protrusion 156 when the secondary filter element 110 is installed over the standpipe 120. Once installed, the cylindrical wall 312, the lip portion 320, the annular portion 314, the top portion 308, and the rim portion 318 are fit against the outer surface of the standpipe 120.

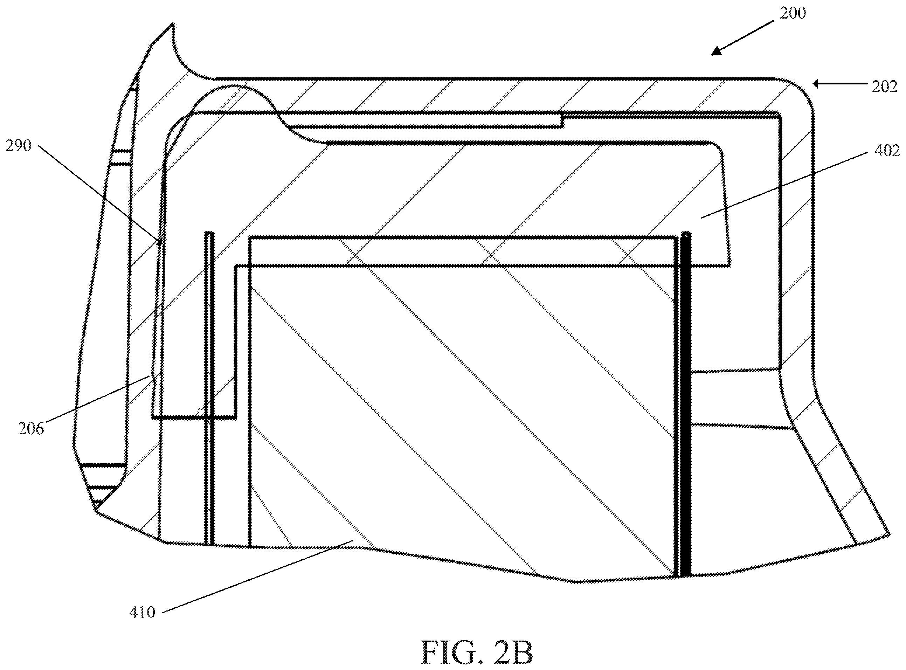

The interior space 170 defined within the filter housing 104 is configured to receive the primary filter element 102. Specifically, a primary filter element second endplate 402 along the first filter end 112 is adjacent to the first housing end 202 and a primary filter element first endplate 404 along the second filter end 114 is adjacent the second housing end 204 when the primary filter element 102 is installed within the interior space 170 of the filter housing 104. As shown in FIG. 2B in a portion 200 of the filtration system 100, the primary filter element second endplate 402 forms a radial seal 290 with the outlet wall 206 when the primary filter element 102 is installed within the filter housing 104. As shown in FIG. 2A, the primary filter element first endplate 404 is configured to abut the internal surface 138 of the cover 108 when the primary filter element 102 is installed within the filter housing 104. An internal volume 160 is defined within and extends through the primary filter element 102 such that the standpipe 120 and the secondary filter element 110 are disposed within the internal volume 160 when the primary filter element 102 is installed within the filter housing 104. Once the primary filter element 102 is disposed within the filter housing 104 and the cover 108 is attached, the protrusion 156 is disposed within an opening 128 defined by a sleeve 118 that extends from an internal surface 138 away from the external surface 148 of the cover 108. As described in greater detail below, the primary filter element first endplate 404 is configured to position the primary filter element 102 within the filter housing 104 and provides more stability after assembling the primary filter element 102 within the filter housing 104.

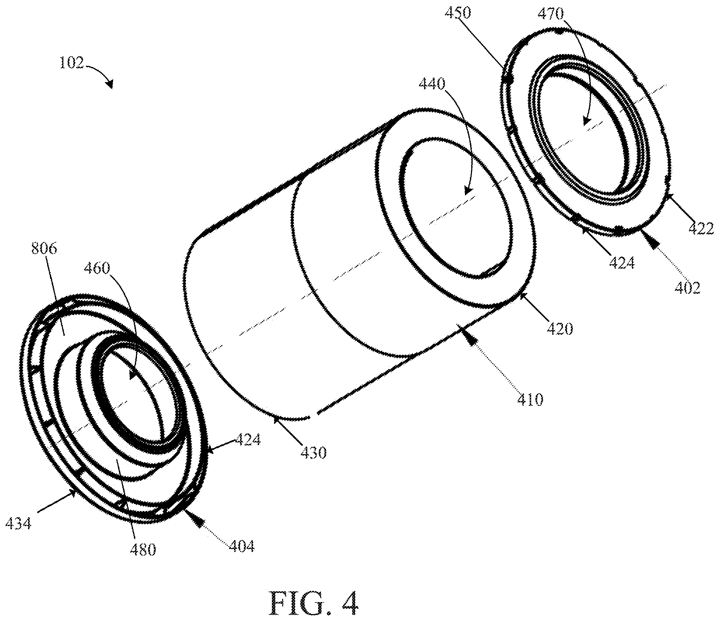

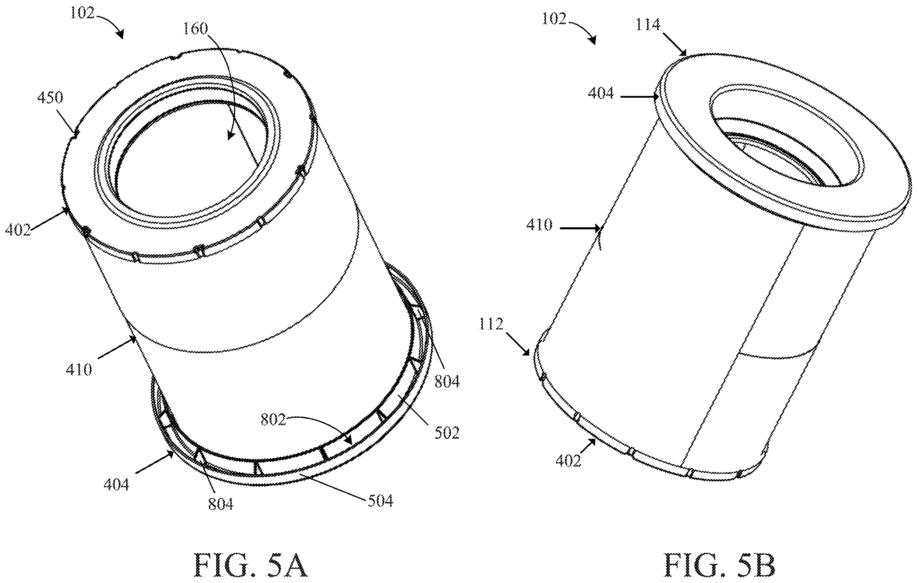

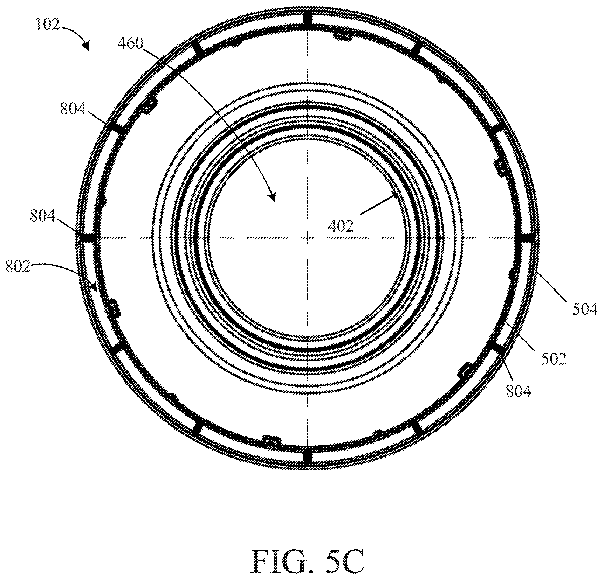

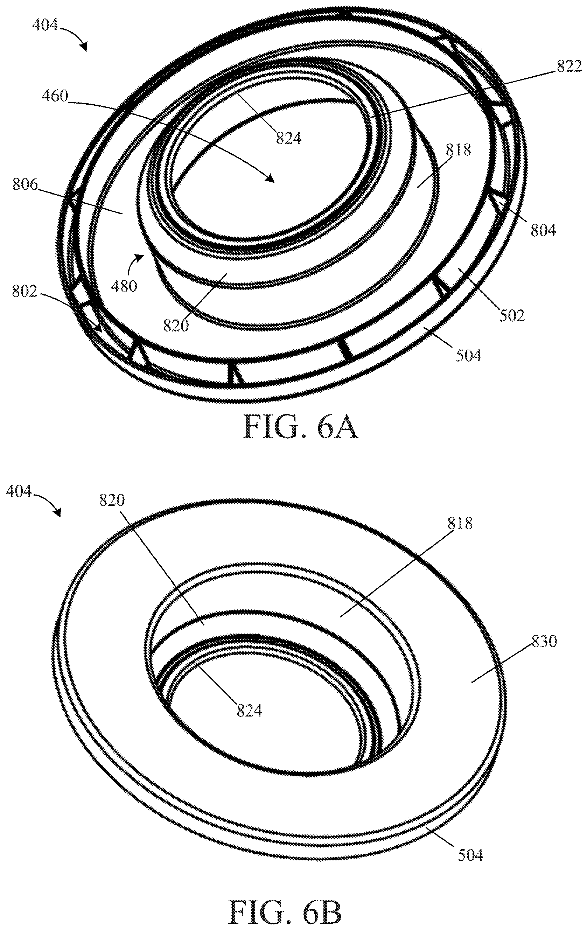

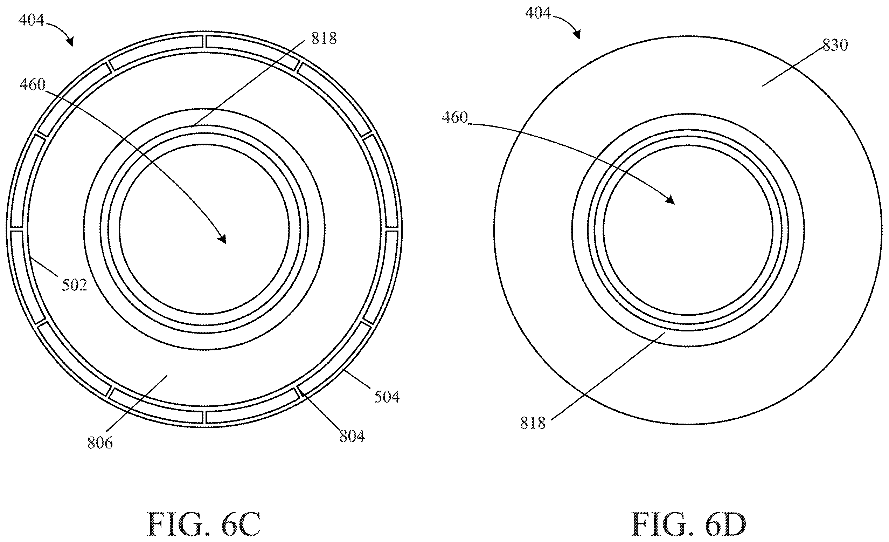

Referring to FIG. 4, the primary filter element 102 in an unassembled state is shown. FIGS. 5A-5C show the primary filter element 102 in an assembled state. A filter media 410 is disposed between the primary filter element first endplate 404 and the primary filter element second endplate 402. The first media end 420 is affixed to an internal surface 432 of the primary filter element second endplate 402 and the second media end 430 is affixed to an internal surface 424 of the primary filter element first endplate 404. When the primary filter element 102 is in an assembled state, the opening 470 of the primary filter element second endplate 402, the internal volume 440 of the filter media 410, and the opening 460 of the primary filter element first endplate 404 are substantially aligned. The primary filter element second endplate 402 includes a plurality of notches 450 disposed along a perimeter of the surface between the external surface 422 and the internal surface 432 of the primary filter element second endplate 402. The plurality of notches 450 may be configured to assist the installation and positioning of the primary filter element second endplate 402 within the filter housing 104 and may impede rotation of the primary filter element 102 within the filter housing 104. As shown in FIGS. 6A-6E, the primary filter element first endplate 404 includes an endplate channel 806, a groove channel 802, and a raised circular wall 480. The endplate channel 806 is formed between the groove channel 802 and the raised circular wall 480 and is configured to receive the second media end 430. The groove channel 802 includes a plurality of ribs 804 that extend radially from an inner groove wall 502 toward the outer groove wall 504, which defines the diameter of the primary filter element first endplate 404. As shown in FIG. 5C, the diameter of the primary filter element first endplate 404 is greater than the diameter of the primary filter element second endplate 402.

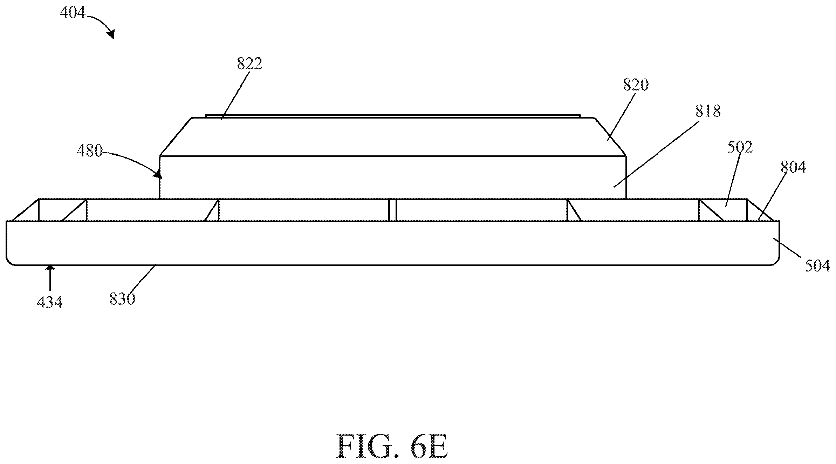

Turning to FIGS. 6A-6E, the external surface 434 includes a substantially flat surface 830 that provides additional structural support and stability when the primary filter element 102 is installed within the filter housing 104. The plurality of ribs 804 and the groove channel 802 form a touch surface that provides a filter element removal feature for a user to grab and remove the primary filter element 102 from the filter housing 104. For example, a user may hold the primary filter element 102 by inserting the user's fingers within the groove channel 802 and pulling, thereby providing ease of serviceability. As shown in FIG. 6E, the inner groove wall 502 extends in the transverse direction to have a height that is greater than the height of the outer groove wall 504. Each rib in the plurality of ribs 804 extend from the top, outer edge of the inner groove wall 502 radially outward and downward toward the top inner edge of the outer groove wall 504. Each rib in the plurality of ribs 804 may be configured to provide a touch surface for a user (e.g., end user, service user, etc.) to contact and grip for ease of serviceability of the primary filter element 102 and/or filtration system 100 (e.g., removal of one or more elements of the filter element from the housing).

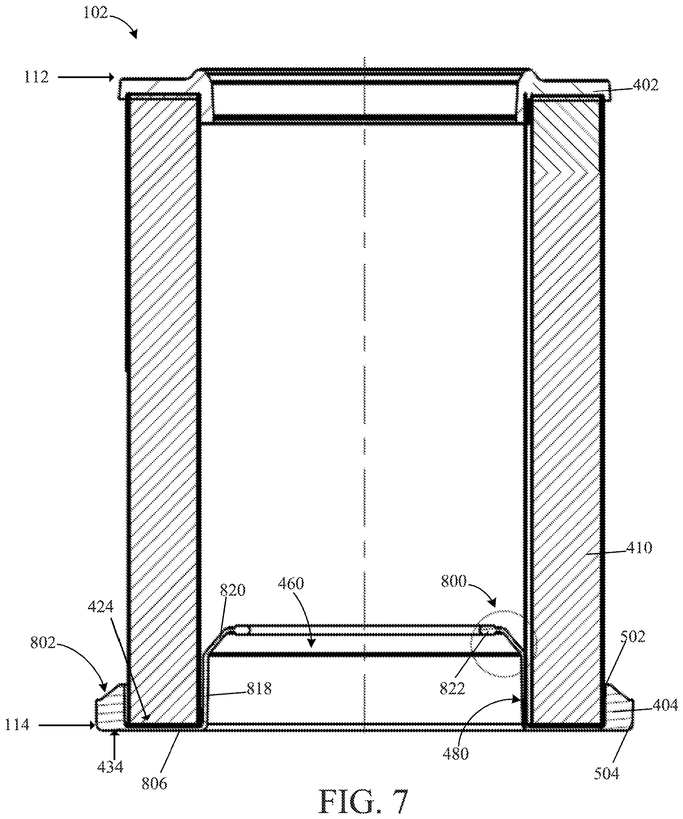

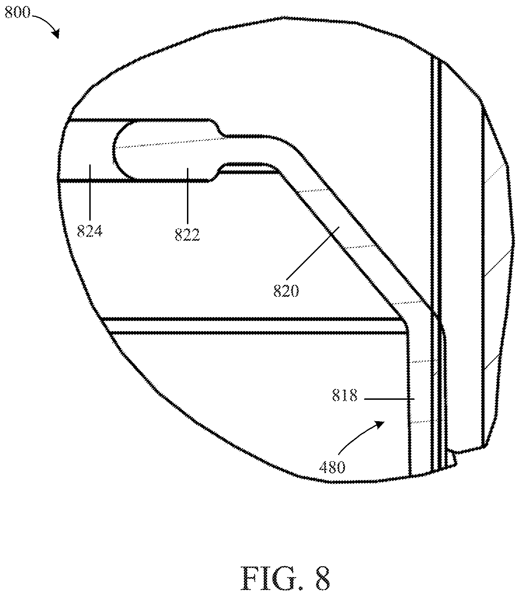

Referring to FIGS. 7 and 8, the raised circular wall 480 extends from the internal surface 424 away from the external surface 434 and is configured to extend into the internal volume 440 of the filter media 410 when the primary filter element 102 is assembled. The circular wall 480 includes an axial wall 818 that extends from an internal surface 424 away from the external surface 434. The axial wall 818 and the inner groove wall 502 form the endplate channel 806. An angled surface 820 extends from the axial wall 818 inwardly (e.g., away from inner groove wall 502 in the lateral direction) toward a ring portion 822. The ring portion 822 extends radially inward. As shown in the portion 800 of the circular wall 480, the ring portion 822 includes a seal surface 824 disposed around an internal perimeter of the ring portion 822. The ring portion 822 (e.g., protrusion) and the seal surface 824 are configured to press against the secondary filter element 110 to form a radial seal 902. In other words, the primary filter element first endplate 404 is configured to form a seal between the filter media 410 and the secondary filter element 110.

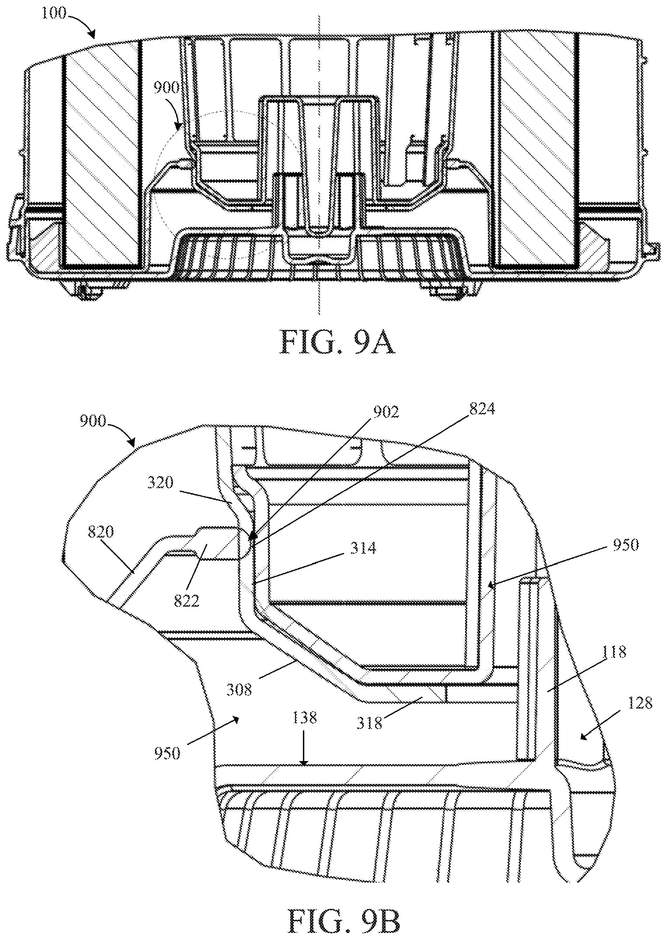

As shown in the portion 900 of the filtration system 100 in FIGS. 9A and 9B, when the secondary filter element 110 and primary filter element 102 are installed within the filter housing 104, the seal surface 824 of the ring portion 822 presses against the annular portion 314 of the secondary filter element 110. A radial seal 902 is formed between the ring portion 822 pressing against the annular portion 314 of the secondary filter element 110. The formation of the radial seal 902 and the radial seal 290 (formed between the primary filter element second endplate 402 and the outlet wall 206) seal the primary filter element 102 within the filter housing 104 such that dirty fluid/air enters the inlet 122, travels through and is filtered by the filter media 410 and the secondary filter element 110, and exits the filtration system 100 through the outlet 124 by way of the standpipe 120. The radial seal 902 formed between the ring portion 822 pressing against the annular portion 314 of the secondary filter element 110 prevent fluid/air from entering the area 950 between the primary filter element 102 and the cover 108.

Various exemplary embodiments provide for a method of installing a filter element (e.g., primary filter element 102 and secondary filter element 110) within a filter housing 104. The method includes positioning the secondary filter element 110 within the filter housing 104. The internal volume 330 of the secondary filter element 110 receives the standpipe 120 of the filter housing 104. The method also includes positioning the primary filter element 102 within the filter housing 104 such that the secondary filter element 102 is positioned within the internal volume 440 of the filter media 410 in FIG. 2A. When the primary filter element 102 is positioned within the filter housing 104 a first radial seal (e.g., radial seal 902) is formed between the seal surface 824 and the annular portion 314 as shown in FIG. 9B. The primary filter second endplate 402 may form a second radial seal (e.g., radial seal 290 as shown in FIG 2B) with an outlet wall of the filter housing when the primary filter element is positioned within the filter housing. The positioning of the secondary filter element within the housing comprises fitting the annular portion 314 around the standpipe 120. The method may also include coupling the cover 108 to the filter housing 104 such that the primary filter element first endplate 404 abuts an internal surface 138 of the cover 108 such that the first radial seal (e.g., radial seal 902) prevents a fluid from entering the area 905 shown in FIG. 9B.

It should be noted that the term "example" as used herein to describe various embodiments is intended to indicate that such embodiments are possible examples, representations, and/or illustrations of possible embodiments (and such term is not intended to connote that such embodiments are necessarily extraordinary or superlative examples).

The term "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the figures. It should be noted that the orientation of various elements may differ according to other exemplary embodiments, and that such variations are intended to be encompassed by the present disclosure.

It is important to note that the construction and arrangement of the various example embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, various parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Other substitutions, modifications, changes and omissions may also be made in the design, operating conditions and arrangement of the various example embodiments without departing from the scope of the concepts presented herein.

While this specification contains many specific implementation details, these should not be construed as limitations on the scope of any inventions or of what may be claimed, but rather as descriptions of features specific to particular implementations of particular inventions. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. A filter element (102), comprising:
a first endplate (404);
a second endplate (402); and
filter media (410) positioned between the first endplate and the second endplate, the filter media defining an internal volume;
the first endplate comprising:
a first external surface (434);
a first internal surface (424), the first internal surface abutting the filter media; and
a raised wall (480) extending from the first internal surface away from the first external surface, the raised wall comprising an angled surface (820) extending from the raised wall inwardly, the raised wall forming a radial seal with a second external surface of a secondary filter element (110), the secondary filter element disposed within the internal volume.

2. The filter element of claim 1, wherein the first endplate further comprises:
a groove channel (802) defined by an inner groove wall (502) and an outer groove wall (504), wherein the angled surface extends away from the inner groove wall;
a plurality of ribs (804) disposed in the groove channel and extending from the inner groove wall to the outer groove wall; and
a ring portion (822) disposed at the angled surface, the ring portion comprising a seal surface disposed about an internal perimeter of the ring portion and configured to press against the secondary filter element so as to form the radial seal.

3. The filter element of claim 1 or claim 2, wherein the second endplate comprises:
a second internal surface (432);
a plurality of notches (450) around a perimeter of the second endplate; and
a second opening (470).

4. The filter element of claim 3, wherein the filter media comprises:
a first media end (420) coupled to the second internal surface;
a second media end (430) opposite the first media end, the second media end coupled to the first internal surface; and/or
wherein the first endplate comprises a first opening (460), the first opening axially aligning with the second opening and the internal volume.

5. A filtration system, comprising:
a housing (104) defining an internal volume;
the filter element of claim 1, wherein the filter element is a primary filter element, and the primary filter element is positioned within the internal volume of the housing, and the secondary filter element (110) is positioned within the internal volume of the housing and within the primary filter element.

6. The filtration system of claim 5, wherein the primary filter element first endplate further comprises a groove channel, the groove channel (802) comprising an outer groove wall (504), an inner groove wall (502), and a plurality of ribs (804), the outer groove wall disposed around a perimeter of the internal surface of the primary filter element first endplate, the inner groove wall disposed radially inward from the outer groove wall, each rib in the plurality of ribs extending radially outward from the inner groove wall toward the outer groove wall.

7. The filtration system of claim 6, wherein an endplate channel (806) is formed on the internal surface between the raised wall and the groove channel, the endplate channel configured to receive an end of the filter media.

8. The filtration system of claim 6 or claim 7, wherein a first outer diameter of the primary filter element first endplate is greater than a second outer diameter of the primary filter element second endplate, the first outer diameter defined by the outer groove wall.

9. The filtration system of any of claims 6 to 8, wherein the plurality of ribs and the groove channel define a touch surface, the touch surface configured to be selectively operable by a user such that when the user operates the touch surface, the primary filter element is removed from the housing.

10. The filtration system of any of claims 5 to 9, wherein the primary filter element second endplate comprises a plurality of notches (450) configured to facilitate installing the primary filter element second endplate within the housing; and/or
wherein the raised wall further comprises an axial wall (818) extending from the internal surface away from the external surface and a ring portion (822) extending from the axial wall away from the internal surface, the ring portion comprising an internal seal surface (824), the ring portion configured to contact the external surface of the secondary filter element and form the radial seal between the external surface of the secondary filter element and the internal seal surface of the ring portion.

11. The filtration system of any of claims 5 to 10, wherein the filter media defines an internal media volume, a portion of the raised wall extends into the internal media volume, and wherein the secondary filter element is disposed within the internal media volume.

12. The filtration system of any of claims 5 to 11, wherein the housing comprises:
a housing first end (202);
a housing second end (204) opposite the housing first end;
a standpipe (120) disposed within the internal volume and extending from the housing first end to the housing second end; and
a cover (108) disposed at the housing second end, the cover comprising a cover internal surface (138) configured to couple to the housing second end.

13. The filtration system of claim 12, wherein the standpipe comprises:
a cage portion (150) having a plurality of openings; and
a top portion (152) extending from the cage portion and away from the housing first end, the top portion defining a cavity (158) formed therewithin, the top portion comprising protrusion (156) that extends from the cavity towards the housing second end, the protrusion disposed within an opening of the cover; wherein optionally
the top portion is configured to receive a secondary filter element internal surface.

14. A method of installing a filter element (102), comprising:
positioning a secondary filter element (110) within a filter housing (104), the secondary filter element defining an internal volume that receives a standpipe (120) of the filter housing such that the standpipe is positioned within the secondary filter element; and
positioning a primary filter element (102) within the filter housing, the primary filter element comprising:
a primary filter second endplate (402);
a primary filter element first endplate (404) comprising:
a first external surface (434);
a first internal surface (424) abutting the filter media; and
a raised wall (480) extending from the first internal surface away from the first external surface, the raised wall comprising an angled surface (820) extending form the raised wall inwardly, the angled surface having a seal surface (824), the seal surface contacting an annular portion (314) of the secondary filter element such that a first radial seal is formed between the seal surface and the annular portion; and
a filter media (410) disposed between the primary filter first endplate and the primary filter second endplate, the filter media defining an internal volume that receives the secondary filter element as the primary filter element is positioned within the filter housing.

15. The method of claim 14, wherein during positioning of the primary filter element within the filter housing, the primary filter second endplate forms a second radial seal with an outlet wall (206) of the filter housing; and/or
wherein positioning the secondary filter element within the housing further comprises fitting the annular portion around the standpipe; and/or
further comprising coupling a cover (108) to the filter housing such that the primary filter element first endplate abuts an internal surface (138) of the cover such that the first radial seal prevents a fluid from entering an area between the primary filter element and the cover.

## Patentansprüche

1. Filterelement (102), umfassend
eine erste Endplatte (404);
eine zweite Endplatte (402); und
ein Filtermedium (410), das zwischen der ersten Endplatte und der zweiten Endplatte positioniert ist, wobei das Filtermedium ein Innenvolumen definiert;
wobei die erste Endplatte Folgendes umfasst:
eine erste Außenfläche (434);
eine erste Innenfläche (424), wobei die erste Innenfläche am Filtermedium anliegt; und
eine erhöhte Wand (480), die sich von der ersten Innenfläche weg von der ersten Außenfläche erstreckt, wobei die erhöhte Wand eine abgewinkelte Fläche (820) umfasst, die sich von der erhöhten Wand nach innen erstreckt, wobei die erhöhte Wand eine radiale Dichtung mit einer zweiten Außenfläche eines Sekundärfilterelements (110) bildet, wobei das Sekundärfilterelement innerhalb des Innenvolumens angeordnet ist.

2. Filterelement nach Anspruch 1, wobei die erste Endplatte weiter Folgendes umfasst:
einen Nutkanal (802), der durch eine innere Nutwand (502) und eine äußere Nutwand (504) definiert ist, wobei sich die abgewinkelte Oberfläche von der inneren Nutwand weg erstreckt;
eine Vielzahl von Rippen (804), die im Nutkanal angeordnet sind und sich von der inneren Nutwand zur äußeren Nutwand erstrecken; und
einen Ringabschnitt (822), der an der abgewinkelten Oberfläche angeordnet ist, wobei der Ringabschnitt eine Dichtungsoberfläche umfasst, die an einem inneren Umfang des Ringabschnitts anliegt und so konfiguriert ist, dass sie gegen das Sekundärfilterelement drückt, um die radiale Dichtung zu bilden.

3. Filterelement nach Anspruch 1 oder Anspruch 2, wobei die zweite Endplatte Folgendes umfasst:
eine zweite Innenfläche (432);
eine Vielzahl von Kerben (450) um einen Umfang der zweiten Endplatte herum; und
eine zweite Öffnung (470).

4. Filterelement nach Anspruch 3, wobei das Filtermedium Folgendes umfasst:
ein erstes Medienende (420), das mit der zweiten Innenfläche gekoppelt ist;
ein zweites Medienende (430) gegenüber dem ersten Medienende, wobei das zweite Medienende mit der ersten Innenfläche gekoppelt ist; und/oder
wobei die erste Endplatte eine erste Öffnung (460) umfasst, wobei die erste Öffnung axial mit der zweiten Öffnung und dem Innenvolumen ausgerichtet ist.

5. Filtersystem, umfassend:
ein Gehäuse (104), das ein Innenvolumen definiert;
das Filterelement nach Anspruch 1, wobei das Filterelement ein Primärfilterelement ist und das Primärfilterelement innerhalb des Innenvolumens des Gehäuses positioniert ist und das Sekundärfilterelement (110) innerhalb des Innenvolumens des Gehäuses und innerhalb des Primärfilterelements positioniert ist.

6. Filtersystem nach Anspruch 5, wobei die erste Endplatte des Primärfilterelements weiter einen Nutkanal umfasst, wobei der Nutkanal (802) eine äußere Nutwand (504), eine innere Nutwand (502) und eine Vielzahl von Rippen (804) umfasst, die äußere Nutwand um einen Umfang der Innenfläche der ersten Endplatte des Primärfilterelements angeordnet ist, die innere Nutwand radial innerhalb der äußeren Nutwand angeordnet ist und jede Rippe der Vielzahl von Rippen sich radial von der inneren Nutwand nach außen in Richtung der äußeren Nutwand erstreckt.

7. Filtersystem nach Anspruch 6, wobei auf der Innenfläche zwischen der erhöhten Wand und dem Nutkanal ein Endplattenkanal (806) gebildet ist, wobei der Endplattenkanal so konfiguriert ist, dass er ein Ende des Filtermediums aufnimmt.

8. Filtersystem nach Anspruch 6 oder Anspruch 7, wobei ein erster Außendurchmesser der ersten Endplatte des Primärfilterelements größer ist als ein zweiter Außendurchmesser der zweiten Endplatte des Primärfilterelements, wobei der erste Außendurchmesser durch die äußere Nutwand definiert ist.

9. Filtersystem nach einem der Ansprüche 6 bis 8, wobei die Vielzahl von Rippen und der Nutkanal eine Berührungsfläche definieren, wobei die Berührungsfläche so konfiguriert ist, dass sie von einem Benutzer selektiv betätigt werden kann, sodass, wenn der Benutzer die Berührungsfläche betätigt, das Primärfilterelement aus dem Gehäuse entfernt wird.

10. Filtersystem nach einem der Ansprüche 5 bis 9, wobei die zweite Endplatte des Primärfilterelements eine Vielzahl von Kerben (450) umfasst, die so konfiguriert sind, dass sie den Einbau der zweiten Endplatte des Primärfilterelements in das Gehäuse erleichtern; und/oder
wobei die erhöhte Wand weiter eine axiale Wand (818) umfasst, die sich von der Innenfläche weg von der Außenfläche erstreckt, und einen Ringabschnitt (822), der sich von der axialen Wand weg von der Innenfläche erstreckt, wobei der Ringabschnitt eine innere Dichtungsfläche (824) umfasst, wobei der Ringabschnitt so konfiguriert ist, dass er die Außenfläche des Sekundärfilterelements berührt und die radiale Dichtung zwischen der Außenfläche des Sekundärfilterelements und der inneren Dichtungsfläche des Ringabschnitts bildet.

11. Filtersystem nach einem der Ansprüche 5 bis 10, wobei das Filtermedium ein inneres Medienvolumen definiert, sich ein Abschnitt der erhöhten Wand in das innere Medienvolumen erstreckt und das Sekundärfilterelement innerhalb des inneren Medienvolumens angeordnet ist.

12. Filtersystem nach einem der Ansprüche 5 bis 11, wobei das Gehäuse Folgendes umfasst:
ein erstes Gehäuseende (202);
ein zweites Gehäuseende (204) gegenüber dem ersten Gehäuseende;
ein Standrohr (120), das innerhalb des Innenvolumens angeordnet ist und sich vom ersten Gehäuseende zum zweiten Gehäuseende erstreckt; und
eine Abdeckung (108), die am zweiten Gehäuseende angeordnet ist, wobei die Abdeckung eine innere Abdeckungsfläche (138) umfasst, die so konfiguriert ist, dass sie sich mit dem zweiten Gehäuseende koppelt.

13. Filtersystem nach Anspruch 12, wobei das Standrohr Folgendes umfasst:
einen Käfigabschnitt (150), der eine Vielzahl von Öffnungen aufweist; und
einen oberen Abschnitt (152), der sich vom Käfigabschnitt und weg vom ersten Gehäuseende erstreckt, wobei der obere Abschnitt einen darin gebildeten Hohlraum (158) definiert, wobei der obere Abschnitt einen Vorsprung (156) umfasst, der sich vom Hohlraum in Richtung des zweiten Gehäuseendes erstreckt, wobei der Vorsprung innerhalb einer Öffnung der Abdeckung angeordnet ist; wobei optional
der obere Abschnitt so konfiguriert ist, dass er eine Innenfläche des Sekundärfilterelements aufnimmt.

14. Verfahren zum Einbau eines Filterelements (102), das Folgendes umfasst:
Positionieren eines Sekundärfilterelements (110) innerhalb eines Filtergehäuses (104), wobei das Sekundärfilterelement ein Innenvolumen definiert, das ein Standrohr (120) des Filtergehäuses aufnimmt, sodass das Standrohr innerhalb des Sekundärfilterelements positioniert ist; und
Positionieren eines Primärfilterelements (102) innerhalb des Filtergehäuses, wobei das Primärfilterelement Folgendes umfasst:
eine zweite Endplatte (402) des Primärfilters;
eine erste Endplatte (404) des Primärfilterelements, umfassend:
eine erste Außenfläche (434);
eine erste Innenfläche (424), die am Filtermedium anliegt; und
eine erhöhte Wand (480), die sich von der ersten Innenfläche weg von der ersten Außenfläche erstreckt, wobei die erhöhte Wand eine abgewinkelte Fläche (820) umfasst, die sich von der erhöhten Wand nach innen erstreckt, wobei die abgewinkelte Fläche eine Dichtungsfläche (824) aufweist, wobei die Dichtungsfläche einen ringförmigen Abschnitt (314) des Sekundärfilterelements berührt, sodass zwischen der Dichtungsfläche und dem ringförmigen Abschnitt eine erste radiale Dichtung gebildet wird; und
ein Filtermedium (410), das zwischen der ersten Endplatte des Primärfilters und der zweiten Endplatte des Primärfilters angeordnet ist, wobei das Filtermedium ein Innenvolumen definiert, das das Sekundärfilterelement aufnimmt, wenn das Primärfilterelement innerhalb des Filtergehäuses positioniert ist.

15. Verfahren nach Anspruch 14, wobei während des Positionierens des Primärfilterelements innerhalb des Filtergehäuses die zweite Endplatte des Primärfilters eine zweite radiale Dichtung mit einer Auslasswand (206) des Filtergehäuses bildet; und/oder
wobei Positionieren des Sekundärfilterelements innerhalb des Gehäuses weiter Einpassen des ringförmigen Abschnitts um das Standrohr umfasst; und/oder
weiter umfassend Koppeln einer Abdeckung (108) mit dem Filtergehäuse, sodass die erste Endplatte des Primärfilterelements an einer Innenfläche (138) der Abdeckung anliegt, sodass die erste radiale Dichtung verhindert, dass ein Fluid in einen Bereich zwischen dem Primärfilterelement und der Abdeckung eindringt.

## Revendications

1. Élément filtrant (102), comprenant :
une première plaque d'extrémité (404) ;
une seconde plaque d'extrémité (402) ; et
un milieu filtrant (410) positionné entre la première plaque d'extrémité et la seconde plaque d'extrémité, le milieu filtrant définissant un volume interne ;
la première plaque d'extrémité comprenant :
une première surface externe (434) ;
une première surface interne (424), la première surface interne venant en butée contre le milieu filtrant ; et
une paroi surélevée (480) s'étendant de la première surface interne à l'opposé de la première surface externe, la paroi surélevée comprenant une surface inclinée (820) s'étendant de la paroi surélevée vers l'intérieur, la paroi surélevée formant un joint radial avec une seconde surface externe d'un élément filtrant secondaire (110), l'élément filtrant secondaire étant disposé à l'intérieur du volume interne.

2. Élément filtrant selon la revendication 1, dans lequel la première plaque d'extrémité comprend en outre :
un canal de rainure (802) défini par une paroi de rainure intérieure (502) et une paroi de rainure extérieure (504), dans lequel la surface inclinée s'étend à l'opposé de la paroi de rainure intérieure ;
une pluralité de nervures (804) disposées dans le canal de rainure et s'étendant de la paroi de rainure intérieure à la paroi de rainure extérieure ; et
une partie circulaire (822) disposée au niveau de la surface inclinée, la partie circulaire comprenant une surface de joint disposée autour d'un périmètre interne de la partie circulaire et configurée pour appuyer sur l'élément filtrant secondaire de manière à former le joint radial.

3. Élément filtrant selon la revendication 1 ou la revendication 2, dans lequel la seconde plaque d'extrémité comprend :
une seconde surface interne (432) ;
une pluralité d'encoches (450) autour d'un périmètre de la seconde plaque d'extrémité ; et
une seconde ouverture (470).

4. Élément filtrant selon la revendication 3, dans lequel le milieu filtrant comprend :
une première extrémité de milieu (420) couplée à la seconde surface interne ;
une seconde extrémité de milieu (430) opposée à la première extrémité de milieu, la seconde extrémité de milieu étant couplée à la première surface interne ; et/ou
dans lequel la première plaque d'extrémité comprend une première ouverture (460), la première ouverture s'alignant axialement sur la seconde ouverture et le volume interne.

5. Système de filtration, comprenant :
un boîtier (104) définissant un volume interne ;
l'élément filtrant selon la revendication 1, dans lequel l'élément filtrant est un élément filtrant primaire, et l'élément filtrant primaire est positionné à l'intérieur du volume interne du boîtier, et l'élément filtrant secondaire (110) est positionné à l'intérieur du volume interne du boîtier et à l'intérieur de l'élément filtrant primaire.

6. Système de filtration selon la revendication 5, dans lequel la première plaque d'extrémité d'élément filtrant primaire comprend en outre un canal de rainure, le canal de rainure (802) comprenant une paroi de rainure extérieure (504), une paroi de rainure intérieure (502) et une pluralité de nervures (804), la paroi de rainure extérieure étant disposée autour d'un périmètre de la surface interne de la première plaque d'extrémité d'élément filtrant primaire, la paroi de rainure intérieure étant disposée radialement vers l'intérieur à partir de la paroi de rainure extérieure, chaque nervure dans la pluralité de nervures s'étendant radialement vers l'extérieur de la paroi de rainure intérieure vers la paroi de rainure extérieure.

7. Système de filtration selon la revendication 6, dans lequel un canal de plaque d'extrémité (806) est formé sur la surface interne entre la paroi surélevée et le canal de rainure, le canal de plaque d'extrémité étant configuré pour recevoir une extrémité du milieu filtrant.

8. Système de filtration selon la revendication 6 ou la revendication 7, dans lequel un premier diamètre extérieur de la première plaque d'extrémité d'élément filtrant primaire est supérieur à un second diamètre extérieur de la seconde plaque d'extrémité d'élément filtrant primaire, le premier diamètre extérieur étant défini par la paroi de rainure extérieure.

9. Système de filtration selon l'une quelconque des revendications 6 à 8, dans lequel la pluralité de nervures et le canal de rainure définissent une surface de contact, la surface de contact étant configurée pour être utilisée sélectivement par un utilisateur de telle sorte que, lorsque l'utilisateur utilise la surface de contact, l'élément filtrant primaire soit retiré du boîtier.

10. Système de filtration selon l'une quelconque des revendications 5 à 9, dans lequel la seconde plaque d'extrémité d'élément filtrant primaire comprend une pluralité d'encoches (450) configurées pour faciliter l'installation de la seconde plaque d'extrémité d'élément filtrant primaire à l'intérieur du boîtier ; et/ou
dans lequel la paroi surélevée comprend en outre une paroi axiale (818) s'étendant de la surface interne à l'opposé de la surface externe et une partie circulaire (822) s'étendant de la paroi axiale à l'opposé de la surface interne, la partie circulaire comprenant une surface de joint interne (824), la partie circulaire étant configurée pour toucher la surface externe de l'élément filtrant secondaire et former le joint radial entre la surface externe de l'élément filtrant secondaire et la surface de joint interne de la partie circulaire.

11. Système de filtration selon l'une quelconque des revendications 5 à 10, dans lequel le milieu filtrant définit un volume de milieu interne, une partie de la paroi surélevée s'étend dans le volume de milieu interne, et dans lequel l'élément filtrant secondaire est disposé à l'intérieur du volume de milieu interne.

12. Système de filtration selon l'une quelconque des revendications 5 à 11, dans lequel le boîtier comprend :
une première extrémité de boîtier (202) ;
une seconde extrémité de boîtier (204) opposée à la première extrémité de boîtier ;
un tube vertical (120) disposé à l'intérieur du volume interne et s'étendant de la première extrémité de boîtier à la seconde extrémité de boîtier ; et
un couvercle (108) disposé à la seconde extrémité de boîtier, le couvercle comprenant une surface interne de couvercle (138) configurée pour être couplée à la seconde extrémité de boîtier.

13. Système de filtration selon la revendication 12, dans lequel le tube vertical comprend :
une partie cage (150) présentant une pluralité d'ouvertures ; et
une partie supérieure (152) s'étendant depuis la partie cage et à l'opposé de la première extrémité de boîtier, la partie supérieure définissant une cavité (158) formée à l'intérieur de celle-ci, la partie supérieure comprenant une saillie (156) qui s'étend de la cavité vers la seconde extrémité de boîtier, la saillie étant disposée dans une ouverture du couvercle ; dans lequel éventuellement,
la partie supérieure est configurée pour recevoir une surface interne d'élément filtrant secondaire.

14. Procédé d'installation d'un élément filtrant (102), comprenant :
le positionnement d'un élément filtrant secondaire (110) à l'intérieur d'un boîtier de filtre (104), l'élément filtrant secondaire définissant un volume interne qui reçoit un tube vertical (120) du boîtier de filtre de telle sorte que le tube vertical soit positionné à l'intérieur de l'élément filtrant secondaire ; et
le positionnement d'un élément filtrant primaire (102) à l'intérieur du boîtier de filtre, l'élément filtrant primaire comprenant :
une seconde plaque d'extrémité de filtre primaire (402) ;
une première plaque d'extrémité d'élément filtrant primaire (404) comprenant :
une première surface externe (434) ;
une première surface interne (424) venant en butée contre le milieu filtrant ; et
une paroi surélevée (480) s'étendant de la première surface interne à l'opposé de la première surface externe, la paroi surélevée comprenant une surface inclinée (820) s'étendant de la paroi surélevée vers l'intérieur, la surface inclinée présentant une surface de joint (824), la surface de joint touchant une partie annulaire (314) de l'élément filtrant secondaire de telle sorte qu'un premier joint radial soit formé entre la surface de joint et la partie annulaire ; et
un milieu filtrant (410) disposé entre la première plaque d'extrémité de filtre primaire et la seconde plaque d'extrémité de filtre primaire, le milieu filtrant définissant un volume interne qui reçoit l'élément filtrant secondaire en même temps que l'élément filtrant primaire est positionné à l'intérieur du boîtier de filtre.

15. Procédé selon la revendication 14, dans lequel, pendant le positionnement de l'élément filtrant primaire à l'intérieur du boîtier de filtre, la seconde plaque d'extrémité de filtre primaire forme un second joint radial avec une paroi de sortie (206) du boîtier de filtre ; et/ou
dans lequel le positionnement de l'élément filtrant secondaire à l'intérieur du boîtier comprend en outre l'ajustement de la partie annulaire autour du tube vertical ; et/ou
comprenant en outre le couplage d'un couvercle (108) au boîtier de filtre de telle sorte que la première plaque d'extrémité d'élément filtrant primaire vienne en butée contre une surface interne (138) du couvercle de telle sorte que le premier joint radial empêche un fluide de pénétrer dans une zone entre l'élément filtrant primaire et le couvercle.
